# EUROPÄISCHE PATENTSCHRIFT

(11) **EP 4 173 930 B1**
(45) Veröffentlichungstag und Bekanntmachung des Hinweises auf die Patenterteilung: **24.09.2025**
(21) Anmeldenummer: 22202710.4
(22) Anmeldetag: 20.10.2022
(51) Int. Cl.: B62D 25/20, B62D 33/04

(54) **FAHRZEUGAUFBAU, INSBESONDERE EINES KÜHLFAHRZEUGS, KÜHLFAHRZEUG MIT EINEM SOLCHEN FAHRZEUGAUFBAU UND VERFAHREN ZUR HERSTELLUNG EINES ISOLIERBODENS**
VEHICLE BODY, IN PARTICULAR A REFRIGERATED VEHICLE, REFRIGERATED VEHICLE WITH SUCH A VEHICLE BODY AND METHOD FOR PRODUCING AN INSULATING FLOOR
CARROSSERIE DE VÉHICULE, NOTAMMENT DE VÉHICULE FRIGORIFIQUE, VÉHICULE FRIGORIFIQUE DOTÉ D'UNE TELLE CARROSSERIE DE VÉHICULE ET PROCÉDÉ DE FABRICATION D'UN PLANCHER ISOLANT

(30) Priorität: 29.10.2021 DE 102021128288
(43) Veröffentlichungstag der Anmeldung: 03.05.2023
(73) Patentinhaber: Kögel Trailer GmbH, 89349 Burtenbach (DE)
(72) Erfinder: BIRLE, Günter, 86877 Walkertshofen (DE)
(74) Vertreter: Meissner Bolte Partnerschaft mbB

(56) Entgegenhaltungen:
- EP-A1- 3 090 926
- EP-A2- 2 025 582
- WO-A1-2006/117395
- WO-A1-99/50060
- WO-A2-2005/019009
- DE-B4- 102018 129 606
- DE-B4- 102019 101 029

## Beschreibung

Die Erfindung betrifft einen Fahrzeugaufbau, insbesondere eines Kühlfahrzeugs, ein Fahrzeug mit einem solchen Fahrzeugaufbau und ein Verfahren zur Herstellung eines Isolierbodens. Ein Fahrzeugaufbau nach dem Oberbegriff des Patentanspruchs 1 ist beispielsweise aus der WO 2005/019009 A2 bekannt.

Kühlfahrzeuge sind mit thermisch isolierten Fahrzeugaufbauten ausgestattet, um beispielsweise kälteempfindliche Waren, aber auch im Besonderen verderbliche Lebensmittel gekühlt in der Kette von Erzeuger, Verarbeiter und Verkäufer transportieren zu können. Derartige Fahrzeugaufbauten sind oftmals aus Isolierpaneelen mit Deckschichten aus faserverstärkten Kunststoffmaterialien gebildet. Die Isolierpaneele werden häufig für die Stirnwand, die Seitenwände sowie das Dach des Fahrzeugaufbaus eingesetzt, um das Gewicht des Fahrzeugaufbaus zu reduzieren sowie eine verbesserte Isolierung zu realisieren. Solche Isolierpaneele sind beispielsweise aus der WO 99/50060 A1 bekannt, die auf die Anmelderin zurückgeht.

Bei thermisch isolierten Fahrzeugaufbauten sind insbesondere an den Isolierboden erhöhte Anforderungen gestellt. Dieser soll einerseits eine hohe Tragfähigkeit aufweisen, um den Belastungen durch Ladegut standzuhalten und andererseits entsprechend gute Isoliereigenschaften aufweisen, um Wärmeverluste und somit den Energieaufwand zur Kühlung des Laderaums zu verringern.

Um dies zu realisieren wurden beispielsweise Isolierböden, wie beispielsweise aus der EP 3 090 926 A1 bekannt, entwickelt, die eine Schaumkernschicht mit einer dem Fahrgestell zugewandten Metallschicht und einer dem Laderaum zugewandten Schicht aus Metall oder einem Holzwerkstoff aufweisen. Derartige Isolierböden weisen nachteilig ein hohes Gewicht auf.

Des Weiteren sind aus dem Stand der Technik Isolierböden bekannt, die anstatt der dem Fahrgestell zugewandten Metallschicht eine Holzschicht mit einer Kunststoffdeckschicht aufweisen. Solche Isolierböden haben den Nachteil, dass sich wegen der kombinierten Holz-/Kunststoffschicht eine erhöhte Gesamtschichtdicke ergibt und somit die Dicke der Schaumkernschicht des Isolierbodens dadurch reduziert ist. Dies wirkt sich nachteilig auf die Isoliereigenschaften des Isolierbodens aus.

Aus der eingangs genannten WO 2005/019009 A2 ist ein Fahrzeugaufbau mit einem Isolierboden bekannt, der eine unten angeordnete Deckschicht und eine oben angeordnete Deckschicht umfasst. Zwischen den beiden Deckschichten ist ein thermisch isolierender Schaumkern vorgesehen. Der Isolierboden ist auf Quer- und Längsträgern angeordnet. Die untere Deckschicht kann als Kunststofflaminat, das mit einer Fasermatte verpresst ist, ausgebildet sein.

Ferner sind aus der DE 10 2018 129 606 B4 sowie der DE 10 2016 101 029 B4 Isolierpaneele bekannt, die bei Isolierböden von Fahrzeugaufbauten zum Einsatz kommen können. Die darin beschriebenen Isolierpaneele weisen zwei gegenüberliegende Kunststoffdeckschichten, die einen dazwischen angeordneten Schaumkern bedecken. Die Kunststoffdeckschichten bestehen aus einem faserverstärktem Kunststoffmaterial.

In der WO 2006/117395 A1 ist zum Beispiel eine isolierende Bodenstruktur eines Fahrzeugaufbaus beschrieben, die aus einem Verbund aus mehreren schichtweise aufeinander angeordneten faserverstärkten Lagen aufgebaut ist. Zwischen den Lagen ist ein Schaumkern angeordnet.

Die EP 2 025 582 A2 offenbart einen Isolierboden eines Fahrzeugaufbaus, der eine untere Trägerplatte, eine obere Bodenabdeckung und einen PUR-Schaumkern umfasst. Zwischen der unteren Trägerplatte und der Bodenabdeckung sind Querträger angeordnet.

Der Erfindung liegt die Aufgabe zu Grunde, einen verbesserten Fahrzeugaufbau bereitzustellen, der ein verringertes Gewicht sowie verbesserte Isoliereigenschaften aufweist. Ferner liegt der Erfindung die Aufgabe zu Grunde, ein Kühlfahrzeug sowie ein Herstellungsverfahren eines Isolierbodens anzugeben.

Erfindungsgemäß wird diese Aufgabe im Hinblick auf den Fahrzeugaufbau durch den Gegenstand des Anspruchs 1 gelöst. Hinsichtlich des Kühlfahrzeugs und des Herstellungsverfahrens wird die vorstehend genannte Aufgabe jeweils durch den Gegenstand des Anspruchs 11 (Kühlfahrzeug) und des Anspruchs 12 (Verfahren) gelöst.

Konkret wird die Aufgabe durch einen Fahrzeugaufbau, insbesondere eines Kühlfahrzeugs, mit einem Isolierboden gelöst, der wenigstens eine untere Deckschicht und wenigstens ein der unteren Deckschicht gegenüber angeordnetes oberes Ladebodenelement, insbesondere wenigstens eine Holzplatte aufweist. Zwischen der unteren Deckschicht und dem oberen Ladebodenelement ist ein ausgebildeter Zwischenraum durch ein thermisch isolierendes Schaummaterial ausgefüllt. Die untere Deckschicht ist ein profiliertes Formteil, das aus wenigstens einer Kunststofffolie und mit der Kunststofffolie verpresstem faserverstärkten, insbesondere glasfaserverstärkten, Kunststoffmaterial gebildet ist.

Die Ausbildung der unteren Deckschicht als profiliertes, faserverstärktes Formteil ermöglicht es, eine Isolierdicke des Isolierbodens an bestimmten Positionen der Deckschicht zu vergrößern oder zu verkleinern. Dies erlaubt insbesondere die verbesserte Anpassung der unteren Deckschicht und somit des Isolierbodens an ein Fahrgestell, an dem der Fahrzeugaufbau montiert werden soll.

Beispielsweise kann das Profil des Formteils Einbuchtungen umfassen, die zur zumindest teilweisen Aufnahme von Fahrgestellteilen, insbesondere Rädern, ausgebildet sind. Der Isolierboden weist dadurch eine erhöhte Funktionalität auf, da die untere Deckschicht nicht nur zum Abdecken des Isolierbodens nach außen dient, sondern auch zur Aufnahme von Komponenten des Fahrgestells oder beispielsweise einer Königszapfeneinrichtung zum Ankoppeln an ein Zugfahrzeug. Zusätzlich oder alternativ kann das Profil des Formteils Ausbuchtungen umfassen, woraus eine Vergrößerung der Isolierdicke des Isolierbodens resultiert. Der Isolierboden und somit der Fahrzeugaufbau weisen somit verbesserte Isoliereigenschaften auf.

Ein besonderer Vorteil der Erfindung resultiert aus der Ausbildung der unteren Deckschicht als Pressverbund zwischen der wenigstens einen Kunststofffolie und dem faserverstärkten Kunststoffmaterial. Dadurch ist das Profil der unteren Deckschicht auf einfache Weise herstellbar. Das Profil ist ein integraler Bestandteil des Formteils. Zusätzliche Arbeitsschritte zur Herstellung des Profils entfallen dadurch. Mit anderen Worten ist die untere Deckschicht als einstückiges beziehungsweise einteiliges profiliertes Formteil ausgebildet. Dies spart Zeit und Kosten bei der Herstellung. Des Weiteren ist dadurch das den Zwischenraum ausfüllende Schaummaterial von direkten äußeren Einflüssen, wie Schmutz und Nässe, geschützt. Die untere Deckschicht ist vorzugsweise geschlossen ausgebildet.

Gegenüber dem aus der eingangs genannten EP 3 090 926 A1 Fahrzeugaufbau hat die Erfindung den Vorteil, dass die untere Deckschicht des Isolierbodens nicht aus Metall, sondern aus dem faserverstärkten Kunststoffformteil gebildet ist. Dadurch ist das Gewicht des Isolierbodens erheblich reduziert, wobei die erforderliche Stabilität bzw. Tragfähigkeit des Isolierbodens zumindest erhalten bleibt.

Bevorzugt ist die untere Deckschicht ein größtenteils flaches Formteil. Das Formteil ist vorzugsweise ein separates Bauteil. Bevorzugt ist das Formteil vorgefertigt. Die untere Deckschicht ist vorzugsweise dünnwandig ausgebildet. Bevorzugt weist die untere Deckschicht eine Schichtdicke von 2 mm bis 5 mm, insbesondere von 2,5 mm bis 4 mm auf. Besonders bevorzugt weist die untere Deckschicht eine Schichtdicke von 3 mm auf. Die Schichtdicke kann eine Toleranz von zirka +/- 0,5 mm aufweisen. Vorzugsweise weist die untere Deckschicht eine einheitliche Schichtdicke auf. Die Schichtdicke kann im Bereich eines Randes an Längsseiten der unteren Deckschicht in Bezug auf die Schichtdicke eines Zentralbereich der unteren Deckschicht erhöht sein.

Bevorzugt ist das obere Ladebodenelement eine Holzplatte, insbesondere eine Sperrholzplatte. Bevorzugt weist das obere Ladebodenelement eine Dicke von 15 mm bis 20 mm, insbesondere von 18 mm, auf.

Die Kunststofffolie ist bevorzugt aus Polyurethan gebildet. Das faserverstärkte Kunststoffmaterial besteht bevorzugt aus mit Polyurethan benetzten Fasern, insbesondere Glasfasern. Durch einen Press- und Aushärteprozess wird das profilierte Formteil aus der Kunststofffolie und dem faserverstärkten Kunststoffmaterial gebildet. Die Fasern sind vorzugsweise Fasermatten oder -streifen, insbesondere Glasfasermatten- oder streifen. Vorzugsweise ist das Formteil, d.h. die untere Deckschicht, glasfaserverstärkt. Mit anderen Worten ist die untere Deckschicht ein faserverstärktes Kunststoffformteil. Es ist denkbar, dass das Formteil alternativ oder zusätzlich karbonfaserverstärkt ist.

Das den Zwischenraum ausgefüllte Schaummaterial bildet eine thermisch isolierende Kernschicht des Isolierbodens. Die Kernschicht ist vorzugsweise fest, insbesondere ausgehärtet. Bevorzugt ist der Zwischenraum vollständig mit dem thermisch isolierenden Schaummaterial ausgefüllt. Zusätzlich bedeckt das Schaummaterial vorzugsweise das Profil des Formteils vollständig. Mit anderen Worten füllt das Schaummaterial das Profil des Formteils vollständig aus und/oder umgibt das Profil des Formteils vollständig. Der Isolierboden ist generell in Sandwichbauweise ausgebildet.

Bei einer bevorzugten Ausführungsform ist die untere Deckschicht über den gesamten Bereich des Isolierbodens ausgebildet. Mit anderen Worten deckt die untere Deckschicht den Isolierboden über die gesamte Fläche unterseitig ab. Das Formteil ist dazu vorzugsweise durchgängig, d.h. nahtlos ausgebildet. Hier ist vorteilhaft, dass die untere Deckschicht den Isolierboden gegenüber der Außenumgebung abdichtet und somit schützt.

Die untere Deckschicht bildet vorzugsweise einen Abschluss des Isolierbodens nach unten hin. Mit anderen Worten bildet die untere Deckschicht vorzugsweise eine Unterbodenschicht des Isolierbodens. Die Kunststofffolie der unteren Deckschicht ist nach außen hin gerichtet. Mit anderen Worten ist die untere Deckschicht im montierten Zustand des Fahrzeugaufbaus zu einem Fahrgestell hin gerichtet. Der Isolierboden kann dabei mit der unteren Deckschicht an dem Fahrgestell direkt aufliegen. Es ist möglich, dass der Isolierboden dazu wenigstens ein Auflageelement umfasst, um die untere Deckschicht und/oder das aufgeschäumte Schaummaterial zu schützen.

Bei einer weiteren bevorzugten Ausführungsform weist die untere Deckschicht wenigstens eine Ausbuchtung auf, die sich in einer von dem Zwischenraum abgewandten Richtung, insbesondere nach unten, erstreckt. Mit anderen Worten weist die untere Deckschicht wenigstens eine Ausbuchtung auf, die sich von einer Außenseite der unteren Deckschicht ausgehend von einer Mitte des Isolierbodens weg erstreckt. Die Außenseite der unteren Deckschicht ist von dem oberen Ladebodenelement abgewandt.

Die Ausbuchtung bildet vorzugsweise an einer Innenseite der unteren Deckschicht eine Vertiefung zur Erhöhung der Isolierstärke des Isolierbodens. Die Innenseite der unteren Deckschicht ist dem oberen Ladebodenelement zugewandt. Anders gesagt, weist der Isolierboden im Bereich der Ausbuchtung eine erhöhte Isolierstärke auf. Durch die Ausbuchtung ist somit die geschäumte Kernschicht in seiner Dicke erhöht. Die Ausbuchtung ist bevorzugt durch das Schaummaterial vollständig ausgefüllt. Durch die Ausbuchtung der unteren Deckschicht weist der Isolierboden verbesserte Isoliereigenschaften auf, sodass der Energiebedarf zur Laderaumkühlung verringert ist.

Die Ausbuchtung kann eine Tiefe von 20 mm bis 150 mm, insbesondere von 20 mm bis 120 mm, insbesondere von 20 mm bis 80 mm aufweisen. Die Ausbuchtung weist bevorzugt eine Tiefe von mindestens 40 mm auf. Die Tiefe bezieht sich auf die Innenseite, insbesondere eine Innenfläche, der unteren Deckschicht.

Die Ausbuchtung kann eine Fläche mit einer Größe aufweisen, die 10 Prozent bis 50 Prozent, insbesondere 20 Prozent bis 40 Prozent, einer Bodenfläche des Isolierbodens beträgt. Bevorzugt weist die Ausbuchtung eine Fläche mit einer Größe auf, die 25 Prozent bis 35 Prozent der Bodenfläche des Isolierbodens beträgt. Besonders bevorzugt weist die Ausbuchtung eine Fläche mit einer Größe auf, die zirka 33 Prozent, d.h. ein Drittel, der Bodenfläche des Isolierbodens beträgt. Dadurch ist die Isolierstärke des Isolierbodens großflächig erhöht und somit die Isolierwirkung des Isolierbodens verbessert.

Die Ausbuchtung bildet vorzugsweise einen wannenförmigen Bereich der unteren Deckschicht, der sich in einer Längsrichtung des Fahrzeugaufbaus erstreckt. Der wannenförmige Bereich ist vorzugsweise eine Vertiefung in der unteren Deckschicht. Der wannenförmige Bereich ist vorzugsweise an einer Innenseite der unteren Deckschicht gebildet. Der wannenförmige Bereich ist dem oberen Ladebodenelement gegenüber angeordnet. Der wannenförmige Bereich ist durch das Schaummaterial ausgefüllt, sodass sich eine in Bezug auf den Bereich außerhalb der Ausbuchtung erhöhte Isolierstärke der Schaumkernschicht ergibt.

Bei einer bevorzugten Ausführungsform weist die untere Deckschicht wenigstens eine Einbuchtung auf, die sich in den Zwischenraum erstreckt. Die Einbuchtung verengt somit den Zwischenraum. Die Einbuchtung und die Ausbuchtung sind in entgegengesetzter Richtung ausgebildet. Die Einbuchtung verkleinert das Volumen des Zwischenraums und die Ausbuchtung vergrößert das Volumen des Zwischenraums. Die Einbuchtung und/oder die Ausbuchtung sind ein Beispiel für ein Profil des Formteils. Die Einbuchtung ermöglicht die Aufnahme von externen Komponenten, wie beispielsweise eines Rades bzw. eines Radlaufs eines Fahrgestells oder anderen Komponenten eines Fahrgestells. Dadurch wird Platz eingespart.

Besonders bevorzugt weist die untere Deckschicht wenigstens eine erste Einbuchtung zur Aufnahme einer Königszapfeneinrichtung und/oder mehrere zweite Einbuchtungen auf, die Teil eines Radlaufs sind. Dies hat den Vorteil, dass die Funktionalität des Isolierbodens erhöht ist. Da die untere Deckschicht durchgängig ausgebildet ist, können zusätzlich Bauteile bspw. zur Aufnahme der Königszapfeneinrichtung bzw. zur Bildung eines Radlaufanschnitts entfallen. Dies reduziert Kosten und spart Platz ein.

Die untere Deckschicht weist bei einer bevorzugten Ausführungsform an dessen Längsseiten jeweils einen Rand auf, der nach oben zum Umgreifen einer Seitenwand des Fahrzeugaufbaus abgewinkelt ist. Mit anderen Worten weist die untere Deckschicht an dessen Längsseiten eine Fassung auf, in die eine Seitenwand des Fahrzeugaufbaus einsitzt. Der Rand bildet an den Längsseiten der unteren Deckschicht eine seitliche Erhöhung. Dies hat den Vorteil, dass einerseits die Montage bzw. die Verbindung der Seitenwände mit dem Isolierboden vereinfacht ist und andererseits die Dichtigkeit an der Verbindungsstelle erhöht ist. Des Weiteren werden dadurch Wärmeverluste reduziert.

Bei einer Ausführungsform ist die untere Deckschicht an dessen Längsseiten flächig abschließend ausgebildet. Mit anderen Worten ist bei dieser Ausführungsform die untere Deckschicht an dessen Längsseiten geradlinig, d.h. frei von einem abgewinkelten Rand, ausgebildet.

Erfindungsgemäß umfasst der Isolierboden mehrere Querträger, insbesondere I-Träger, die in dem Zwischenraum angeordnet sind, und wenigstens zwei Längsträger, die den Zwischenraum seitlich begrenzen. Die Quer- und/oder Längsträger liegen vorzugsweise an der unteren Deckschicht und/oder an dem oberen Ladebodenelement direkt an. Die untere Deckschicht, die Querträger, die Längsträger und das obere Ladebodenelement bilden die Struktur des Isolierbodens. Die Quer- und/oder Längsträger sind bevorzugt mit der Innenseite der unteren Deckschicht und einer Innenseite des oberen Ladebodenelements fest, d.h. unlösbar verbunden. Vorzugsweise sind die Quer- und/oder Längsträger mit der unteren Deckschicht und/oder dem oberen Ladebodenelement stoffschlüssig verbunden. Zusätzlich oder alternativ können die Quer- und/oder Längsträger mit der unteren Deckschicht und/oder dem oberen Ladebodenelement formschlüssig verbunden sein. Hier ist der einfache Aufbau des Isolierbodens der Vorteil, wobei durch die Kombination der Träger sowie der unteren Deckschicht und des oberen Ladebodenelements eine besonders stabile Struktur gebildet ist.

Besonders bevorzugt sind die Quer- und/oder Längsträger mit der unteren Deckschicht und/oder mit dem oberen Ladebodenelement verklebt. Konkret sind die Quer- und/oder Längsträger bevorzugt auf der Innenseite der unteren Deckschicht aufgeklebt. Zusätzlich oder alternativ können die Quer- und/oder Längsträger an der unteren Deckschicht und/oder an dem oberen Ladebodenelement mechanisch befestigt sein. Die Innenseite der unteren Deckschicht ist zumindest abschnittsweise flächig ausgebildet. Die Querträger und/oder die Längsträger sind bevorzugt aus faserverstärktem, insbesondere glasfaserverstärktem, Kunststoff gebildet. Die Längsträger können alternativ aus einem Kunststoff gebildet sein, der frei von Glasfasern ist. Der Isolierboden ist hier durch die Klebeverbindungen zwischen den Quer- bzw. Längsträgern einfach und kostengünstig herstellbar. Es sind keine zusätzlichen Verschraubungen oder dergleichen erforderlich, um die Träger zu fixieren.

Die Erfindung kann zusätzlich eine untere Deckschicht eines Isolierbodens eines Kühlfahrzeugaufbaus betreffen, die ein profiliertes Formteil ist, das aus einer Kunststofffolie und mit der Kunststofffolie verpresstem faserverstärktem, insbesondere glasfaserverstärktem, Kunststoffmaterial gebildet ist, wobei das profilierte Formteil zumindest eine Ausbuchtung zur Erhöhung einer Isolierstärke und/oder zumindest eine Einbuchtung zur Aufnahme von Fahrgestellkomponenten aufweist, die in Bezug auf eine Referenzfläche, insbesondere Innenfläche der Deckschicht, in entgegengesetzter Richtung ausgebildet sind.

Bei der Herstellung der unteren Deckschicht wird vorzugsweise die Kunststofffolie in eine Ausnehmung einer Werkzeugform eingelegt. Die Werkzeugform bildet dabei die Negativform der herzustellenden unteren Deckschicht ab. Die Werkzeugform umfasst ein Negativprofil zur Bildung des profilierten Formteils. In einem ersten Verfahrensschritt wird die Kunststofffolie vorzugsweise an eine innen liegende Formkontur der Ausnehmung angesaugt, sodass die Kunststofffolie an der Formkontur faltenfrei anliegt. Auf die Kunststofffolie wird bevorzugt eine Faserlage, insbesondere Glasfaserlage, angeordnet und mit dem Kunststoffmaterial in flüssigem Zustand benetzt, um die Faserlage mit dem flüssigen Kunststoffmaterial, insbesondere Polyurethan, zu tränken. Anschließend verpresst ein Pressteil einer Pressvorrichtung die benetzte Faserlage, insbesondere Glasfaserlage, mit der Kunststofffolie. Das Pressteil übt vorzugsweise solange einen Anpressdruck aus, bis eine vorbestimmte Aushärtedauer zum Aushärten des flüssigen Kunststoffmaterials erreicht wird. Danach wird das Pressteil gelöst. Das fertige faserverstärkte Formteil wird aus der Werkzeugform entnommen und kann zur Bildung des Isolierbodens weiterverwendet werden. Das faserverstärkte Formteil bildet die untere Deckschicht. Die untere Deckschicht ist formstabil und weist ein Profil auf.

Nach einem nebengeordneten Aspekt betrifft die Erfindung ein Kühlfahrzeug mit wenigstens einem Fahrzeugaufbau der vorstehend beschriebenen Art.

Nach einem weiteren nebengeordneten Aspekt betrifft die Erfindung ein Verfahren zur Herstellung eines Isolierbodens eines erfindungsgemäßen Fahrzeugaufbaus, wobei der Isolierboden wenigstens eine untere Deckschicht, wenigstens ein oberes Ladebodenelement, mehrere Querträger und wenigstens zwei Längsträger umfasst. Bei dem Verfahren werden wenigstens eine Kunststofffolie und ein faserverstärktes, insbesondere glasfaserverstärktes, Kunststoffmaterial zur Bildung eines profilierten Formteils miteinander verpresst, wobei das Formteil die untere Deckschicht bildet. Das Kunststoffmaterial ist vorzugsweise Polyurethan. Zusätzlich oder alternativ besteht die Kunststofffolie bevorzugt aus Polyurethan.

Die Quer- und Längsträger werden anschließend an einer Innenseite der unteren Deckschicht angebracht. Dies kann durch eine Klebeverbindung erfolgen. Das obere Ladebodenelement wird auf den Quer- und/oder Längsträgern angebracht. Dies kann ebenfalls durch Kleben erfolgen. Zusätzlich können die Quer- und/oder Längsträger an der Innenseite der unteren Deckschicht und/oder an dem oberen Ladebodenelement formschlüssig befestigt werden. Zusätzlich oder alternativ kann eine mechanische Befestigung der Quer- und/oder Längsträger an der Innenseite der unteren Deckschicht und/oder an dem oberen Ladebodenelement erfolgen. Durch das Anbringen des Ladebodenelements wird wenigstens ein Zwischenraum zwischen der unteren Deckschicht und dem Ladebodenelement gebildet. Anschließend wird der Zwischenraum mit einem selbstaufschäumenden Flüssigmaterial derart ausgeschäumt, dass sich eine thermisch isolierende Schaumkernschicht bildet. Die fertig ausgebildete thermisch isolierende Schaumkernschicht ist vorzugsweise fest, insbesondere ausgehärtet. Das einzubringende Flüssigmaterial ist bevorzugt ein Flüssigkunststoff. Der Flüssigkunststoff kann faserverstärkt, insbesondere glasfaserverstärkt sein. Dies kann zusätzlich mechanisch stabilisierende Eigenschaften mit sich bringen.

Hinsichtlich des Kühlfahrzeugs sowie des Herstellungsverfahrens wird auf die im Zusammenhang mit dem Fahrzeugaufbau erläuterten Vorteile verwiesen. Darüber hinaus können das Kühlfahrzeug beziehungsweise das Herstellungsverfahren alternativ oder zusätzlich einzelne oder eine Kombination mehrerer zuvor in Bezug auf den Fahrzeugaufbau genannter Merkmale aufweisen.

Die Erfindung wird nachstehend mit weiteren Einzelheiten unter Bezug auf die beigefügten Zeichnungen näher erläutert. Die dargestellten Ausführungsformen stellen Beispiele dar, wie der erfindungsgemäße Fahrzeugaufbau ausgestaltet sein kann.

In diesen zeigen,
- Fig. 1: eine perspektivische Darstellung eines Fahrzeugaufbaus nach einem erfindungsgemäßen Ausführungsbeispiel;
- Fig. 2: eine Detailansicht im Bereich einer Ecke des Fahrzeugaufbaus nach Fig. 1;
- Fig. 3: eine perspektivische Darstellung einer unteren Deckschicht des Fahrzeugaufbaus nach Fig. 1;
- Fig. 4: eine perspektivische Darstellung einer unteren Deckschicht eines Fahrzeugaufbaus nach einem weiteren erfindungsgemäßen Fahrzeugaufbau;
- Fig. 5: eine perspektivische Darstellung eines Isolierbodens des Fahrzeugaufbaus nach Fig. 4, wobei ein der unteren Deckschicht gegenüber angeordnetes Ladebodenelement ausgeblendet ist; und
- Fig. 6: eine weitere perspektivische Darstellung des Isolierbodens nach Fig. 5.

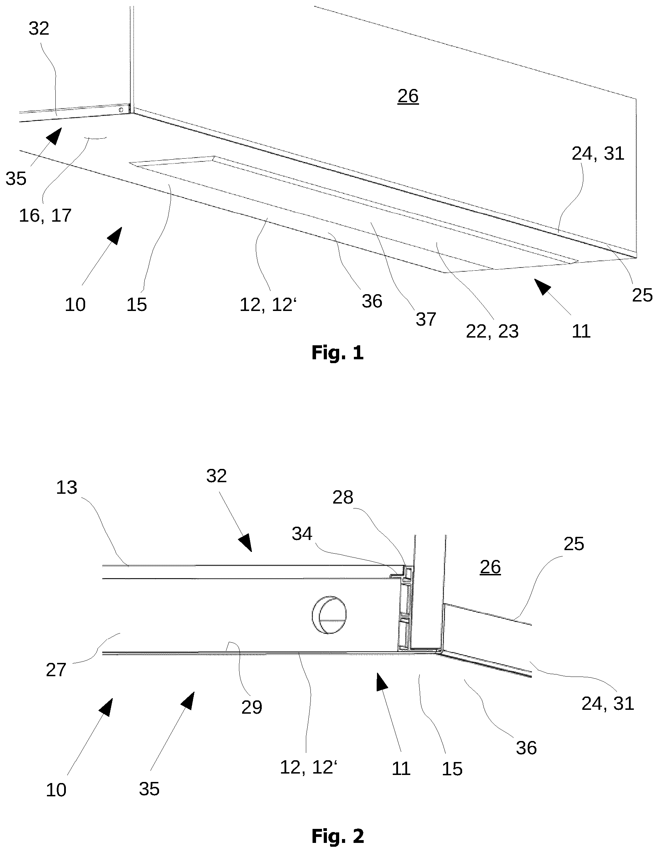

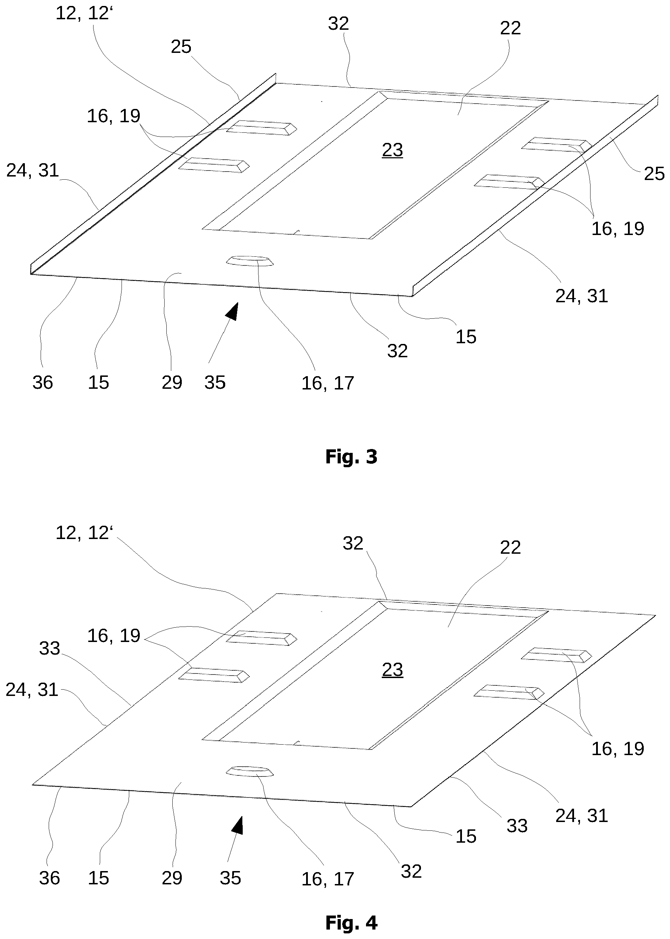

Fig. 1 bis 3 zeigen einen Fahrzeugaufbau 10 nach einem bevorzugten erfindungsgemäßen Ausführungsbeispiel. Fig. 4 bis 6 zeigen einen Fahrzeugaufbau 10 nach einem weiteren erfindungsgemäßen Ausführungsbeispiel. Bei den Fahrzeugaufbauten 10 handelt es sich jeweils um einen thermisch isolierten Kofferaufbau. Bevorzugt kommen die Fahrzeugaufbauten 10 als Kühlfahrzeugaufbau zum Einsatz, um gekühlte sowie tiefgekühlte Güter und Waren zu transportieren. Die Fahrzeugaufbauten 10 sind des Weiteren zum Transport von feuchtigkeitsempfindlichen Gütern, d.h. zum Trockentransport von Gütern geeignet. Weitere Anwendungsfälle für die Fahrzeugaufbauten 10 sind möglich.

Der Fahrzeugaufbau 10 weist gemäß Fig. 1 einen Isolierboden 11, zwei Seitenwände 26 sowie ein nicht ersichtliches Dach, eine Stirnwand und eine Heckwand auf, die vorzugsweise ein Ladeportal umfasst. Die Seitenwände 26, das Dach und die Stirnwand sind als Isolierpaneele ausgebildet, die vorzugsweise durch eine thermisch isolierende Kernschicht, insbesondere Schaumkernschicht, und zwei an der Kernschicht angeordnete faserverstärkte, glasfaserverstärkte, Kunststoffschichten gebildet sind. Die faserverstärkten Kunststoffschichten sind an der Kernschicht einander gegenüber angeordnet. Die Isolierpaneele sind somit in Sandwichbauweise ausgebildet.

Der Isolierboden 11 ist, wie in Fig. 2 erkennbar, ebenfalls in Sandwichbauweise ausgebildet. Der Isolierboden 11 weist eine untere Decksicht 12, ein oberes Ladebodenelement 13 und einen dazwischen ausgebildeten Zwischenraum 14 auf.

An dieser Stelle wird darauf hingewiesen, dass sich die Fahrzeugaufbauten 10 der beiden erfindungsgemäßen Ausführungsbeispiele lediglich in der Ausgestaltung der unteren Deckschicht 12 unterscheiden. Alle weiteren Merkmale der Fahrzeugaufbauten 10 gemäß Fig. 1 bis 3 und gemäß Fig. 4 bis 6 sind identisch.

Der Zwischenraum 14 des Isolierbodens 11 ist mit einem thermisch isolierenden Schaummaterial ausgefüllt. Die untere Deckschicht 12 und das obere Ladebodenelement 13 sind einander gegenüber angeordnet, wobei das Schaummaterial dazwischenliegt. Konkret ist der Zwischenraum 14 mit einem thermisch isolierenden Kunststoffmaterial ausgeschäumt, die eine Schaumkernschicht bildet. Das Kunststoffmaterial ist Polyurethan.

Das obere Ladebodenelement 13 ist aus einem Holzwerkstoff gebildet. Konkret ist das obere Ladebodenelement 13 eine Holzplatte, insbesondere eine Sperrholzplatte. Das obere Ladebodenelement 13 kann aus mehreren aneinandergereihten Holzplatten gebildet sein. Denkbar ist auch, dass das obere Ladebodenelement 13 aus einer einzigen, insbesondere großflächigen, Holzplatte gebildet ist. Bei den Isolierböden 11 gemäß den Fig. 1 bis 3 sowie Fig. 4 bis 6 ist die Holzplatte 18 mm dick ausgebildet. Andere Plattendicken sind möglich.

Die untere Deckschicht 12 ist bei den Isolierböden 11 der Fahrzeugaufbauten 10 gemäß beider erfindungsgemäßer Ausführungsbeispiele ein profiliertes Formteil 12'. Das profilierte Formteil 12' ist aus einem glasfaserverstärktem Kunststoffmaterial gebildet, das mit einer Kunststofffolie 15 verpresst ist. Die Kunststofffolie 15 ist UV-Strahlung abschirmend ausgebildet. Das glasfaserverstärkte Kunststoffmaterial und/oder die Kunststofffolie 15 umfassen Polyurethan. Andere Kunststoffarten sind möglich.

Das profilierte Formteil 12' ist also ein GFK-Formteil. Das profilierte Formteil 12' bildet ein separates Bauteil, das vorgefertigt ist. D.h., dass vor der Herstellung des Isolierbodens 11 das profilierte Formteil 12' hergestellt und als Einzelteil zur Bildung des Isolierbodens 11 bereitgestellt wird. Das profilierte Formteil 12' weist ein Profil auf, das später näher beschrieben wird.

Die untere Deckschicht 12 bzw. das profilierte Formteil 12' weist eine Schichtdicke von 2 mm bis 4 mm, bevorzugt zirka 3 mm auf. Die Schichtdicke der unteren Deckschicht 12 kann einheitlich dick sein. Bereiche erhöhter Schichtdicke, bspw. zur Verstärkung oder Aussteifung der unteren Deckschicht 12 sind möglich.

Bei der Herstellung der unteren Deckschicht 12 bzw. des profilierten Formteils 12' wird die Kunststofffolie 15 in eine Ausnehmung einer Werkzeugform eingelegt. Die Kunststofffolie 15 kann einschichtig oder mehrschichtig ausgebildet sein. Die Werkzeugform bildet dabei die Negativform der herzustellenden unteren Deckschicht 12 ab. Die Kunststofffolie 15 wird vorzugsweise an eine innenliegende Formkontur der Ausnehmung angesaugt, sodass die Kunststofffolie 15 an der Formkontur faltenfrei anliegt. Auf die Kunststofffolie 15 wird eine Glasfaserlage angeordnet und mit dem Kunststoffmaterial in flüssigem Zustand benetzt, um die Faserlage mit dem flüssigen Kunststoffmaterial, insbesondere Polyurethan, zu tränken. Anschließend verpresst ein Pressteil einer Pressvorrichtung die benetzte Glasfaserlage mit der Kunststofffolie 15. Das Pressteil übt solange einen Anpressdruck aus, bis eine bspw. vorbestimmte Aushärtedauer zum Aushärten des flüssigen Kunststoffmaterials erreicht wird. Danach wird das Pressteil gelöst. Das fertige profilierte, glasfaserverstärkte Formteil 12' (GFK-Formteil) wird aus der Werkzeugform entnommen und kann zur Bildung des Isolierbodens 11 weiterverwendet werden. Das GFK-Formteil 12' bildet die untere Deckschicht 12. Die untere Deckschicht 12 ist formstabil und weist ein eingeformtes Profil auf. Die untere Deckschicht 12 ist im Wesentlichen ein flächiges Formteil 12'. Ausgenommen ist das in die untere Deckschicht 12 integrierte Profil.

Wie in den Fig. 1, 3 4 und 6 gut ersichtlich ist, weist die untere Deckschicht 12 das vorgenannte Profil auf. Das profilierte Formteil 12' umfasst eine Ausbuchtung 22 und mehrere Einbuchtungen 16. Es ist möglich, dass das profilierte Formteil 12' mehrere Ausbuchtungen 22 umfasst.

Die Ausbuchtung 22 ist von dem oberen Ladebodenelement 13 abgewandt ausgebildet. Mit anderen Worten ist die Ausbuchtung 22 ein Volumen des Zwischenraumes 14 vergrößernd ausgebildet. Die Einbuchtungen 16 sind dem oberen Ladebodenelement 13 zugewandt ausgebildet. Oder anders gesagt, sind die Einbuchtungen 16 ein Volumen des Zwischenraumes 14 verkleinernd ausgebildet. Die Ausbuchtung 22 erstreckt sich von dem oberen Ladebodenelement 13 weg und die Einbuchtungen 16 erstecken sich zu dem oberen Ladebodenelement 13 hin, d.h. in den Zwischenraum 14. Die Ausbuchtung 22 und die Einbuchtungen 16 erstecken sich in entgegengesetzter Dickenrichtung des Isolierbodens 11.

Die Ausbuchtung 22 ist ein wannenförmiger Bereich 23 in der unteren Deckschicht 12. Die untere Deckschicht 12 weist eine dem oberen Ladebodenelement 13 zugewandte Innenseite 29, insbesondere Innenfläche, und eine von dem oberen Ladebodenelement 13 abgewandte Außenseite 36, insbesondere Außenfläche. Die Ausbuchtung 22 erstreckt sich ausgehend von der Innenseite 29 der unteren Deckschicht 12 nach außen. Mit anderen Worten bildet die Ausbuchtung 22 eine Vertiefung in der unteren Deckschicht 12 derart, dass eine Isolierstärke des Isolierbodens 11 erhöht ist. Konkret ist durch die Ausbuchtung 22 die Isolierstärke der Schaumkernschicht vergrößert.

Der wannenförmige Bereich 23 erstreckt sich in Längsrichtung des Isolierbodens 11. Mit anderen Worten ist die Vertiefung der unteren Deckschicht 12 in Längsrichtung ausgebildet. Der wannenförmige Bereich 23 umfasst zirka ein Drittel, d.h. zirka 30 Prozent, einer Bodenfläche des oberen Ladebodenelements 13 des Isolierbodens 11. Mit anderen Worten weist der wannenförmige Bereich 23 eine Flächenerstreckung auf, die zirka ein Drittel der Bodenfläche des oberen Ladebodenelements 13 entspricht. Dadurch ist die Isolierwirkung des Isolierbodens 11 erheblich verbessert, da in dem wannenförmigen Bereich 23 der Isolierboden 11 eine größere Isolierdicke aufweist, als außerhalb des wannenförmigen Bereichs 23.

Der wannenförmige Bereich 23 weist eine Tiefe auf, die mindestens 40 mm beträgt. Mit anderen Worten ist der wannenförmige Bereich 23 40 mm oder größer 40 mm tief ausgebildet. Der wannenförmige Bereich 23 ist über die gesamte vertiefte Fläche mindestens 40 mm tief ausgebildet. Der wannenförmige Bereich 23 ist, wie in Fig. 3, 4 und 6 gezeigt, zwischen zwei Längsträgern 28 des Isolierbodens 11 angeordnet. Auf die Längsträger 28 wird später näher eingegangen.

Der wannenförmige Bereich 23 ist im Wesentlichen quaderförmig ausgebildet. Alternativ oder zusätzlich kann der wannenförmige Bereich 23 zylindrisch ausgebildet sein. Andere Formen sind möglich. Der wannenförmige Bereich 23 bildet auf der Außenseite 36 der unteren Deckschicht 12 eine Ausformung 37 (siehe Fig. 1).

Wie vorstehend beschrieben, umfasst das Profil des GFK-Formteils 12' mehrere Einbuchtungen 16. Insgesamt weist die untere Deckschicht 12 fünf Einbuchtungen 16 auf, wobei eine erste Einbuchtung 17 zur außenseitigen Aufnahme einer Königszapfeneinrichtung 18 ausgebildet ist und vier zweite Einbuchtungen 19 jeweils Teil eines Radlaufs 21 sind. Es ist möglich, dass alternativ zwei zweite Einbuchtungen 19 vorgesehen sind, die jeweils Teil von zwei Radläufen sind. Durch die Einbuchtungen 17, 19 bestehen an der Außenseite 36 von der unteren Deckschicht 12 ummantelte Freiräume.

Die erste Einbuchtung 17 ist in einem ersten, insbesondere vorderen, Längsende 35 des Isolierbodens 11 ausgebildet. Die erste Einbuchtung 17 ist zylindrisch ausgebildet. Mit anderen Worten stellt die erste Einbuchtung 17 einen runden Freiraum zur Verfügung. Alternativ oder zusätzlich kann die erste Einbuchtung 17 quaderförmig ausgebildet sein. Andere Formen sind möglich.

Jeweils zwei der zweiten Einbuchtungen 19 sind paarweise an einer der Längsseiten 31 des Isolierbodens 11 im Bereich eines Längsträgers 28 ausgebildet. Die zweiten Einbuchtungen 19 sind quaderförmig ausgebildet. Alternativ oder zusätzlich können die zweiten Einbuchtungen 19 zylinderförmig ausgebildet sein. Andere Formen sind möglich. Die beiden paarweisen zweiten Einbuchtungen 16 sind in Reihe in Längsrichtung des Isolierbodens 11 angeordnet. Zwischen den beiden paarweise angeordneten zweiten Einbuchtungen 19 verläuft die Ausbuchtung 22 in Längsrichtung des Isolierbodens 11.

Wie Fig. 3, 4 und 6 gezeigt, sind die beiden zweiten paarweise angeordneten Einbuchtungen 19 in Längsrichtung des Isolierbodens 11 voneinander beabstandet. Mit anderen Worten sind die beiden zweiten paarweise angeordneten Einbuchtungen 19 in Längsrichtung des Isolierbodens 11 voneinander getrennt. Alternativ können die beiden zweiten paarweise angeordneten Einbuchtungen 19 in Längsrichtung des Isolierbodens 11 derart ineinander übergehen, dass an den Längsseiten 31 jeweils eine einzelne längliche zweite Einbuchtung 19 gebildet ist.

Bei dem Fahrzeugaufbau 10 gemäß Fig. 1 bis 3 weist die untere Deckschicht 12 an dessen Längsseiten 24 jeweils einen Rand 25 auf, der nach oben zum Umgreifen einer Seitenwand 26, insbesondere eines Seitenwandpaneels, des Fahrzeugaufbaus 10 abgewinkelt ist. Gemäß Fig. 2 ist der Rand 25 in Bezug auf die Innenseite 29, insbesondere Innenfläche, der unteren Deckschicht 12 rechtwinkelig abstehend ausgebildet. Der Rand 25 verläuft über die gesamte Länge der unteren Deckschicht 12.

Der Fahrzeugaufbau 10 gemäß Fig. 4 bis 6 unterscheidet sich von dem Fahrzeugaufbau 10 gemäß Fig. 1 bis 3 darin, dass die untere Deckschicht 12 an dessen Längsseiten 24 einen flachverlaufenden Rand 33 aufweist. Mit anderen Worten verläuft der Rand 33 der unteren Deckschicht 12 des Fahrzeugaufbaus 10 gemäß Fig. 4 bis 6 geradlinig, d.h. ohne abgewinkelten Bereich.

Die untere Deckschicht 12 erstreckt sich generell über die gesamte Unterseite des Fahrzeugaufbaus 10. Dies trifft auf beide Ausführungsbeispiele zu. Mit anderen Worten überzieht die untere Deckschicht 12 den gesamten Isolierboden 11. Die untere Deckschicht 12 ist geschlossen ausgebildet. Oder anders gesagt, ist die untere Deckschicht 12 frei von Durchbrüchen ausgebildet. Die untere Deckschicht 12 ist somit durchgängig ausgebildet. Die untere Deckschicht 12 bildet einen Abschluss des Fahrzeugaufbaus 10 nach unten hin. Die untere Deckschicht 12 ist im montierten Zustand des Fahrzeugaufbaus 10 einem Fahrgestell zugewandt. Das Fahrgestell kann an der unteren Deckschicht 12 direkt aufliegen.

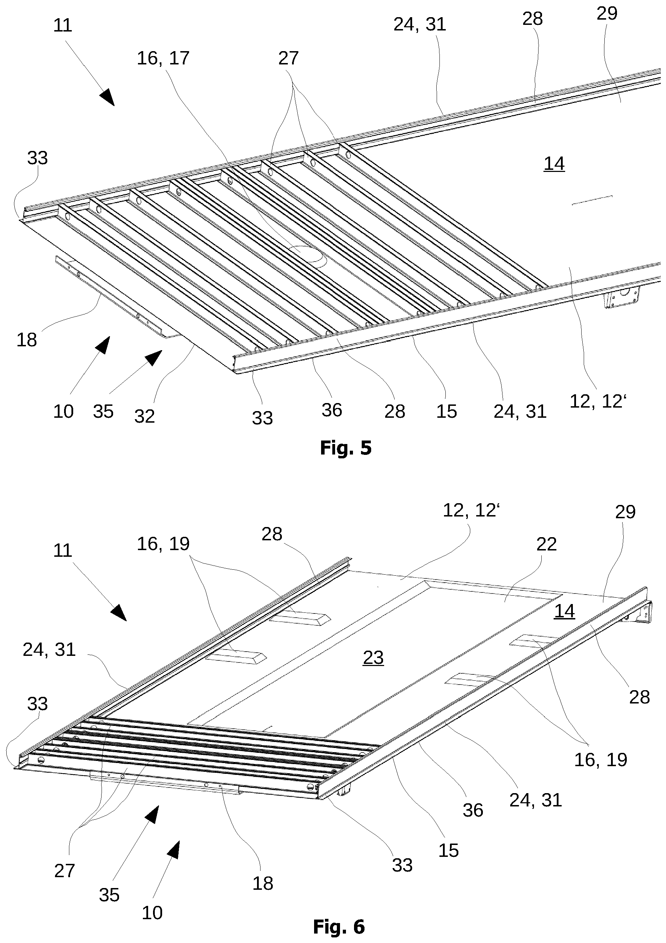

Des Weiteren weist der Isolierboden 11 mehrere Querträger 27 und zwei Längsträger 28 auf. Dies ist in Fig. 5 und 6 gut zu erkennen. Der Isolierboden 11 weist insgesamt zwei Längsseiten 31 und zwei Schmalseiten 32 auf. Die Längsseiten 31 und die Schmalseiten 32 stehen rechtwinkelig zueinander.

Die Längsträger 28 sind im Bereich der Längsseiten 31 des Isolierboden 11 angeordnet. Die beiden Längsträger 28 begrenzen den Zwischenraum 14 seitlich. Mit anderen Worten begrenzen die beiden Längsträger 28 die Schaumkernschicht an den Längsseiten 31 des Isolierbodens 11. Die Längsträger 28 weisen, wie in

Fig. 2 gezeigt, im Querschnitt ein L-förmiges Profil auf. An einer Oberseite weisen die Längsträger 18 jeweils einen Auflageabschnitt 34 auf, der stufenförmig ausgebildet ist und sich in Längsrichtung der Längsträger 28 erstreckt. An den Auflageabschnitt 34 liegt das oberes Ladebodenelement 13 randseitig auf.

Wie in den Fig. 5 und 6 gezeigt ist, sind mehrere Querträger 27 in dem Zwischenraum 14 angeordnet. Zur besseren Darstellung ist die Schaumkernschicht ausgeblendet. Die Querträger 27 sind in die Schaumkernschicht eingebettet. Mit anderen Worten sind die Querträger 27 in den Isolierboden 11 integriert. Die Querträger 27 erstrecken sich zwischen den beiden Längsträgern 28. Mit anderen Worten sind die Querträger 27 zwischen den beiden Längsträgern 28 querverlaufend angeordnet. Die Querträger 27 sind I-Träger. Die Querträger 27 und die Längsträger 28 sind aus glasfaserverstärktem Kunststoff gebildet. Oder anders gesagt, die Querträger 27 und Längsträger 28 bestehen aus einem glasfaserverstärkten Kunststoffmaterial. Alternativ können die Längsträger 28 aus einem Kunststoffmaterial ohne Glasfaserverstärkung gebildet sein.

Die Querträger 27 sind im Bereich eines Längsendes 35 des Isolierbodens 11 angeordnet. Es ist möglich, dass zusätzlich nicht dargestellte Querträger 27 über die gesamte Länge des Isolierbodens 11 verteilt angeordnet sind. Wie in der Fig. 5 und 6 erkennbar, ist eine Königszapfeneinrichtung 18 an der unteren Deckschicht 12 im Bereich des Längsendes 35 außenseitig angeordnet. In diesem Bereich treten im Betrieb besonders hohe Kräfte auf, die in den Fahrzeugaufbau 10 eingeleitet werden. Zur Aussteifung des Isolierbodens 11 sind eine Vielzahl der Querträger 27 in dem Zwischenraum 14 im Bereich der Königszapfeneinrichtung 18 angeordnet.

Im Folgenden wird beschrieben, wie der Isolierboden 11 der Fahrzeugaufbauten 10 gemäß beiden Ausführungsbeispielen hergestellt wird.

Bei einem ersten Verfahrensschritt wird die vorgefertigte untere Deckschicht 12 mit den Querträgern 27 und Längsträgern 28 verklebt. Konkret werden die Querträger 27 und Längsträger 28 auf die Innenseite 29 der unteren Deckschicht 12 aufgeklebt. Die Ausrichtung der Träger 27, 28 erfolgt, wie vorstehend beschrieben. Das obere Ladebodenelement 13 wird auf die Querträger 27 aufgelegt und mit diesen verklebt. Randseitig liegt das obere Ladebodenelement 13 auf dem Auflageabschnitt 34 auf. Dies ist in Fig. 2 gut zu sehen. Das obere Ladebodenelement 13 wird dabei ebenfalls mit den Längsträgern 28 verklebt.

Der zwischen dem oberen Ladebodenelement 13 und der unteren Deckschicht 12 ausgebildete Zwischenraum 14 wird anschließend mit einem selbstaufschäumenden Flüssigkunststoffmaterial, insbesondere Polyurethan, derart ausgeschäumt, dass sich eine thermisch isolierende Schaumkernschicht bildet. Dabei werden die Zwischenräume zwischen den Querträgern 27 sowie die Ausbuchtung 22 vollständig ausgeschäumt.

### Bezugszeichenliste

- 10: Fahrzeugaufbau
- 11: Isolierboden
- 12: untere Deckschicht
- 12': Formteil
- 13: oberes Ladebodenelement
- 14: Zwischenraum
- 15: Kunststofffolie
- 16: Einbuchtung
- 17: erste Einbuchtung
- 18: Königszapfeneinrichtung
- 19: zweite Einbuchtungen
- 21: Radlauf
- 22: Ausbuchtung
- 23: wannenförmiger Bereich
- 24: Längsseite der unteren Deckschicht
- 25: Rand
- 26: Seitenwand des Fahrzeugaufbaus
- 27: Querträger
- 28: Längsträger
- 29: Innenseite der unteren Deckschicht
- 31: Längsseiten
- 32: Schmalseiten
- 33: flachverlaufender Rand
- 34: Auflageabschnitt
- 35: Längsende
- 36: Außenseite der unteren Deckschicht
- 37: Ausformung

## Patentansprüche

1. Fahrzeugaufbau (10), insbesondere eines Kühlfahrzeugs, mit einem Isolierboden (11), der wenigstens eine untere Deckschicht (12) und wenigstens ein der unteren Deckschicht (12) gegenüber angeordnetes oberes Ladebodenelement (13), insbesondere wenigstens eine Holzplatte, aufweist, wobei ein zwischen der unteren Deckschicht (12) und dem oberen Ladebodenelement (13) ausgebildeter Zwischenraum (14) durch ein thermisch isolierendes Schaummaterial ausgefüllt ist, wobei
die untere Deckschicht (12) ein profiliertes Formteil (12') ist, das aus wenigstens einer Kunststofffolie (15) und mit der Kunststofffolie (15) verpresstem faserverstärkten, insbesondere glasfaserverstärkten, Kunststoffmaterial gebildet ist,
**dadurch gekennzeichnet, dass**
mehrere Querträger (27), insbesondere I-Träger, in dem Zwischenraum (14) angeordnet sind, und wenigstens zwei Längsträger (28) den Zwischenraum (14) seitlich begrenzen.

2. Fahrzeugaufbau (10) nach Anspruch 1,
**dadurch gekennzeichnet, dass**
die untere Deckschicht (12) über den gesamten Bereich des Isolierbodens (11) ausgebildet ist.

3. Fahrzeugaufbau (10) nach Anspruch 1 oder 2,
**dadurch gekennzeichnet, dass**
die untere Deckschicht (12) wenigstens eine Ausbuchtung (22) aufweist,
die sich in einer von dem Zwischenraum (14) abgewandten Richtung, insbesondere nach unten, erstreckt.

4. Fahrzeugaufbau (10) nach Anspruch 3,
**dadurch gekennzeichnet, dass**
die Ausbuchtung einen wannenförmigen Bereich (23) der unteren Deckschicht (12) bildet, der sich in einer Längsrichtung des Fahrzeugaufbaus (10) erstreckt.

5. Fahrzeugaufbau (10) nach Anspruch 3 oder 4,
**dadurch gekennzeichnet, dass**
der Isolierboden (11) im Bereich der Ausbuchtung (22) eine erhöhte Isolierstärke aufweist.

6. Fahrzeugaufbau (10) nach einem der vorhergehenden Ansprüche,
**dadurch gekennzeichnet, dass**
die untere Deckschicht (12) wenigstens eine Einbuchtung (16) aufweist, die sich in den Zwischenraum (14) erstreckt.

7. Fahrzeugaufbau (10) nach einem der vorhergehenden Ansprüche,
**dadurch gekennzeichnet, dass**
die untere Deckschicht (12) wenigstens eine erste Einbuchtung (17) zur Aufnahme einer Königszapfeneinrichtung (18) und/oder mehrere zweite Einbuchtungen (19) aufweist, die Teil eines Radlaufs (21) sind.

8. Fahrzeugaufbau (10) nach einem der vorhergehenden Ansprüche,
**dadurch gekennzeichnet, dass**
die untere Deckschicht (12) an dessen Längsseiten (24) jeweils einen Rand (25) aufweist, der nach oben zum Umgreifen einer Seitenwand (26) des Fahrzeugaufbaus (10) abgewinkelt ist.

9. Fahrzeugaufbau (10) nach einem der vorhergehenden Ansprüche,
**dadurch gekennzeichnet, dass**
die Quer- und/oder Längsträger (27, 28) an der unteren Deckschicht (12) und/oder an dem oberen Ladebodenelement (13) direkt anliegen.

10. Fahrzeugaufbau (10) nach einem der vorhergehenden Ansprüche,
**dadurch gekennzeichnet, dass**
die Quer- und/oder Längsträger (27, 28) mit der unteren Deckschicht (12) und/oder mit dem oberen Ladebodenelement (13) verklebt sind.

11. Kühlfahrzeug mit wenigstens einem Fahrzeugaufbau (10) nach einem der vorhergehenden Ansprüche.

12. Verfahren zur Herstellung eines Isolierbodens (11) eines Fahrzeugaufbaus (10) nach einem der Ansprüche 1 bis 10, wobei der Isolierboden (11) (11) wenigstens eine untere Deckschicht (12), wenigstens ein oberes Ladebodenelement (13), mehrere Querträger und wenigstens zwei Längsträger umfasst, wobei bei dem Verfahren:
- wenigstens eine Kunststofffolie (15), und ein faserverstärktes, insbesondere glasfaserverstärktes, Kunststoffmaterial zur Bildung eines profilierten Formteils (12') miteinander verpresst werden, wobei das Formteil (12') die untere Deckschicht (12) bildet;
- die Quer- und Längsträger (27, 28) an einer Innenseite (29) der unteren Deckschicht (12), insbesondere durch Kleben, angebracht werden;
- das Ladebodenelement (13) auf den Quer- und/oder Längsträgern (27, 28), insbesondere durch Kleben, angebracht wird, wobei wenigstens ein Zwischenraum (14) zwischen der unteren Deckschicht (12) und dem Ladebodenelement (13) gebildet wird; und
- der Zwischenraum (14) mit einem selbstaufschäumenden Flüssigmaterial derart ausgeschäumt wird, dass sich eine thermisch isolierende Schaumkernschicht bildet.

## Claims

1. A vehicle body (10), in particular of a refrigerated vehicle, having an insulating floor (11), which has at least one lower covering layer (12) and at least one upper loading floor element (13), in particular at least one wooden board, which is arranged opposite the lower covering layer (12), wherein an intermediate space (14) formed between the lower covering layer (12) and the upper loading floor element (13) is filled with a thermally insulating foam material, wherein
the lower covering layer (12) is a profiled moulded part (12'), which is formed from at least one plastic film (15) and fibre-reinforced, in particular glass-fibre-reinforced, plastic material compressed with the plastic film (15),
**characterised in that**
multiple cross members (27), in particular I-beams, are arranged in the intermediate space (14), and at least two longitudinal members (28) laterally delimit the intermediate space (14).

2. The vehicle body (10) according to Claim 1,
**characterised in that**
the lower covering layer (12) is formed over the entire region of the insulating floor (11).

3. The vehicle body (10) according to Claim 1 or 2,
**characterised in that**
the lower covering layer (12) has at least one protrusion (22), which extends in a direction away from the intermediate space (14), in particular downwards.

4. The vehicle body (10) according to Claim 3,
**characterised in that**
the protrusion forms a trough-like region (23) of the lower covering layer (12), said region extending in a longitudinal direction of the vehicle body (10).

5. The vehicle body (10) according to Claim 3 or 4,
**characterised in that**
the insulating floor (11) has an increased insulation thickness in the region of the protrusion (22).

6. The vehicle body (10) according to one of the preceding claims,
**characterised in that**
the lower covering layer (12) has at least one recess (16), which extends into the intermediate space (14).

7. The vehicle body (10) according to one of the preceding claims,
**characterised in that**
the lower covering layer (12) has at least one first recess (17) for receiving a kingpin device (18) and/or multiple second recesses (19), which are part of a wheel housing (21).

8. The vehicle body (10) according to one of the preceding claims,
**characterised in that**
the lower covering layer (12) has an edge (25) on each of its longitudinal sides (24), said edge being angled upwards to fit around a side wall (26) of the vehicle body (10).

9. The vehicle body (10) according to one of the preceding claims,
**characterised in that**
the cross and/or longitudinal members (27, 28) bear directly against the lower covering layer (12) and/or against the upper loading floor element (13).

10. The vehicle body (10) according to one of the preceding claims,
**characterised in that**
the transverse and/or longitudinal members (27, 28) are adhesively bonded to the lower covering layer (12) and/or to the upper loading floor element (13).

11. A refrigerated vehicle having at least one vehicle body (10) according to one of the preceding claims.

12. A method for producing an insulating floor (11) of a vehicle body (10) according to one of Claims 1 to 10, wherein the insulating floor (11) comprises at least one lower covering layer (12), at least one upper loading floor element (13), multiple cross members and at least two longitudinal members, wherein, in the method:
- at least one plastic film (15) and a fibre-reinforced, in particular glass-fibre-reinforced, plastic material are compressed with one another to form a profiled moulded part (12'), wherein the moulded part (12') forms the lower covering layer (12) ;
- the cross and longitudinal members (27, 28) are attached to an inner side (29) of the lower covering layer (12), in particular by adhesive bonding;
- the loading floor element (13) is attached to the cross and longitudinal members (27, 28), in particular by adhesive bonding, wherein at least one intermediate space (14) is formed between the lower covering layer (12) and the loading floor element (13); and
- the intermediate space (14) is filled with a self-foaming liquid material such that a thermally insulating foam core layer is formed.

## Revendications

1. Carrosserie de véhicule (10), notamment d'un véhicule frigorifique, pourvu d'un plancher isolant (11), qui comporte au moins une couche de recouvrement (12) inférieure et au moins élément (13) supérieur de plancher de chargement, placé au vis-à-vis de la couche de recouvrement (12) inférieure, notamment au moins une plaque en bois, un espace intermédiaire (14) conçu entre la couche de recouvrement (12) inférieure et l'élément (13) supérieur de plancher de chargement étant rempli d'une matière alvéolaire isolante thermique,
la couche de recouvrement (12) inférieure étant une pièce moulée (12') profilée, qui est constituée d'au moins un film en plastique (15) et d'une matière plastique renforcée par fibres, notamment par fibres de verre, comprimée avec le film en plastique (15),
**caractérisée en ce que**
plusieurs traverses (27), notamment en forme de I sont placées dans l'espace intermédiaire (14) et au moins deux longerons (28) délimitent latéralement l'espace intermédiaire (14).

2. Carrosserie de véhicule (10) selon la revendication 1,
**caractérisée en ce que**
la couche de recouvrement (12) inférieure est conçue sur l'ensemble de la zone du plancher isolant (11).

3. Carrosserie de véhicule (10) selon la revendication 1 ou 2,
**caractérisée en ce que**
la couche de recouvrement (12) inférieure comporte au moins un renflement (22), qui s'étend dans une direction opposée à l'espace intermédiaire (14), notamment vers le bas.

4. Carrosserie de véhicule (10) selon la revendication 3,
**caractérisée en ce que**
le renflement constitue une zone (23) en forme de cuve de la couche de recouvrement (12) inférieure, qui s'étend dans une direction longitudinale de la carrosserie de véhicule (10).

5. Carrosserie de véhicule (10) selon la revendication 3 ou 4,
**caractérisée en ce que**
dans la zone du renflement (22), le plancher isolant (11) fait preuve d'une épaisseur d'isolation renforcée.

6. Carrosserie de véhicule (10) selon l'une quelconque des revendications précédentes,
**caractérisée en ce que**
la couche de recouvrement (12) inférieure comporte au moins un creux (16), qui s'étend dans l'espace intermédiaire (14).

7. Carrosserie de véhicule (10) selon l'une quelconque des revendications précédentes,
**caractérisée en ce que**
la couche de recouvrement (12) inférieure comporte au moins un premier creux (17), destiné à recevoir un système d'axe-pivot (18) et / ou plusieurs deuxièmes creux (19), qui sont une partie d'un passage de roues (21) .

8. Carrosserie de véhicule (10) selon l'une quelconque des revendications précédentes,
**caractérisée en ce que**
la couche de recouvrement (12) inférieure comporte sur ses côtés longitudinaux (24) chaque fois un bord (25), qui est coudé vers le haut, pour entourer une paroi latérale (26) de la carrosserie de véhicule (10).

9. Carrosserie de véhicule (10) selon l'une quelconque des revendications précédentes,
**caractérisée en ce que**
les traverses et / ou les longerons (27, 28) s'appuient directement sur la couche de recouvrement (12) inférieure et / ou sur l'élément (13) supérieur de plancher de chargement.

10. Carrosserie de véhicule (10) selon l'une quelconque des revendications précédentes,
**caractérisée en ce que**
les traverses et / ou les longerons (27, 28) sont collés avec la couche de recouvrement (12) inférieure et / ou avec l'élément (13) supérieur de plancher de chargement.

11. Véhicule frigorifique, pourvu d'au moins une carrosserie de véhicule (10) selon l'une quelconque des revendications précédentes.

12. Procédé de fabrication d'un plancher isolant (11) d'une carrosserie de véhicule (10) selon l'une quelconque des revendications 1 à 10, le plancher isolant (11) comprenant au moins une couche de recouvrement (12) inférieure, au moins un élément (13) supérieur de plancher de chargement, plusieurs traverses et au moins deux longerons, lors du procédé :
- au moins un film en plastique (15) et au moins une matière plastique renforcée par fibres, notamment renforcée par fibres de verre étant comprimés l'un avec l'autre pour constituer une pièce moulée (12') profilée, la pièce moulée (12') constituant la couche de recouvrement (12) inférieure ;
- les traverses et les longerons (27, 28) étant montés, notamment par collage sur une face intérieure (29) de la couche de recouvrement (12) inférieure ;
- l'élément (13) de plancher de chargement étant monté, notamment par collage sur les traverses et / ou les longerons (27, 28), au moins un espace intermédiaire (14) étant constitué entre la couche de recouvrement (12) inférieure et l'élément (13) de plancher de chargement ; et
- l'espace intermédiaire (14) étant garni de mousse avec une matière liquide auto-expansible, de sorte que se constitue une couche d'âme en mousse isolante thermique.
